# EUROPEAN PATENT APPLICATION

(11) **EP 2 562 909 A1**
(43) Date of publication of application: **27.02.2013**
(21) Application number: 11178550.7
(22) Date of filing: 23.08.2011
(51) Int. Cl.: H02J 7/14, A63H 27/00, A63H 30/04

(54) **Electrical charger for a radio-controlled toy**

(71) Applicant: Silverlit Limited, Causeway Bay Hong Kong (HK)
(72) Inventor: Wong, Leung Kwok, Hong Kong (CN)
(74) Representative: Sandri, Sandro

(57) **Abstract**

A handheld electrical charger (10) for a toy vehicle provides a manual handle (27) on the housing (11) for generating kinetic energy. A dynamo (15) within the housing and in mechanical communication with the handle generates electrical energy from the kinetic energy. A power takeoff transfers a portion of the kinetic energy or the electrical energy to a power inlet for a toy, and the toy is separable from the charger. The toy includes an electrical storage device to be charged by electrical output from the inlet. The toy is operable as a toy under its own recharged electrical power when the power take off and power inlet is disconnected. There can be a power storage for DC power in the housing and/or in the toy. A dock is provided for selectively creating an electrical coupling of the toy vehicle to transfer the electrical power and decoupling to allow the vehicle to operate independently of the charger.

## Description

### FIELD OF THE DISCLOSURE

The present disclosure relates to apparatus used for recharging electrical storage devices and more particularly to a hand held charger, which in one form is a hand-operated dynamo electrical charger for a wireless toy. The present disclosure in one form relates generally to manual generation of electricity.

### BACKGROUND

Dynamo style power generators have a long history of usage. However, these generators are bulky, low power, single voltage, single device, hard to crank, inefficient, no feedback, and/or dangerous to electrical storage devices.

Dynamos are known as devices used to convert kinetic energy into electrical current. In some cases dynamos are used in conjunction with other components for providing a recharging apparatus for electrical storage devices.

In other cases dynamos are used as portable recharging devices for small electronics such as radios, cell phones or the like. In these cases, a dynamo charging apparatus is provided in communication with a hand crank for allowing input of kinetic energy through rotating of the crank where the dynamo is driven to output electrical current. These types of portable dynamo chargers are typically designed for specific applications for recharging specific devices, and/or electrical storage devices, rather than being adapted to recharge rechargeable conventional electrical storage devices that are usable with a plurality of portable electronic devices. The kinetic energy needed to drive the dynamo charger is provided by the user cranking the handle.

In the field of wireless telephones and similar portable electronic devices, rechargeable electrical technology has become increasingly important. Users of such devices rely on batteries to be charged so that the device may be used at all times, in all locations. Typically, electrical storage devices are charged using a conventional outlet and a transformer with a cord that connects to the device, and sometimes in connection with a "docking station" or similar base used to recharge the electrical of the device. Often manual electrical chargers are difficult to use and fail to reliably meet the needs of users of wireless devices. An improved manually-operated electrical charger is needed.

Rechargeable battery devices of various chemistries can be used. A rechargeable battery upon being discharged often needs to be removed from the toy device and placed into an electrically powered charger typically coupled to line power or a vehicle electrical system as the power origin. Unfortunately, electrical recharge to again power a toy device requires downtime during which the toy device cannot be used and often involves adult interaction to remove an electrical and place the same into a charging device.

Thus, there exists a need for an electrically powered toy rechargeable by a child. There is the need for an efficient portable device to produce electrical energy in the field. Additionally, there is a need for a power source that can be used to generate output current and voltages to a wide range of different electronic devices with their various electrical chemistries and power needs. Moreover, there is a need for a power source that is relatively easy and efficient to use and control.

### SUMMARY OF THE DISCLOSURE

The present disclosure provides a dynamo electrical charger adapted to recharge an external electrical storage device of a toy so as to provide amusement to the user.

A dynamo charger can be used for recharging different kinds of electrical storage devices usable as a power source for a plurality of electronic devices.

The electrical charger according to the disclosure includes a handheld electrical charger for a toy vehicle and provides a manual handle on the housing for generating kinetic energy. A dynamo within the housing and in mechanical communication with the handle generates electrical energy from the kinetic energy. A power takeoff transfers at least a portion of the kinetic energy or the electrical energy to a power inlet for a toy.

The toy is separable from the charger. The toy includes an electrical storage device to be charged by electrical output from the outlet. The toy is operable as a toy under its own recharged electrical power when the power take off from the charger and a power inlet to the toy is disconnected.

There can be a power storage device for the DC power in the housing and/or in the toy.

A dock is provided for selectively creating an electrical coupling between the power take off and power inlet of the toy vehicle to transfer the electrical charge. Decoupling at the dock allows the toy vehicle to operate independently of the charger.

In one form, the disclosed system comprises at least two parts. There is a human power generator which further comprises:
a. Palm size housing;
b. Generator for generates electricity;
c. Gear system to step up the motor speed;
d. Pulley system with a 200 to 500 mm cord for pulling process;
e. Protection circuit to prevent over-charge the capacitor;
f. Detection circuit to monitor and indicate the charging status; and
g. Charging dock to engage the flying object.

The second part is a flying object which further comprises:
a. A plastic fuselage with wings;
b. Single or plural no of propellers on nose of fuselage and/or wings;
c. A dc motor;
d. Gear system for motor and propeller;
e. Gold capacitor for energy storage; and
f. Charging contact plates.

The human power generator can be operative with all tiny flying toys, for instance weighing about between 10 and 50 grams, and preferably about 18 grams.

Features of this disclosure include:
1. portable hand held energy generator and charging dock;
2. using human power to convert mechanical energy to electrical energy in support of ejection of tiny flying toy;
3. eco-friendly, green energy for low-power consumption toy;
4. built-in protection and detection circuits; and
5. built-in energy storage.

The disclosure is further described with reference to the accompanying drawings.

### BRIEF DESCRIPTION OF THE DRAWINGS

The novel features of this disclosure, as well as the disclosure itself, both as to its structure and its operation, will be best understood from the accompanying drawings, taken in conjunction with the accompanying description, in which similar reference characters refer to similar parts, and in which:

FIG. 1A illustrates a top view of the dynamo electrical charger with a pull cord and connected handle according to the disclosure;

FIG. 1B illustrates a side view of the dynamo electrical charger with a pull cord and connected handle according to the disclosure;

FIG. 1C illustrates a perspective view of the dynamo electrical charger with a pull cord and connected handle according to the disclosure;

FIG. 1D illustrates a interior of the dynamo electrical charger with a pull cord and connected handle according to the disclosure;

FIG. 2A illustrates a side view of the dynamo electrical charger with a pull tape and connected handle according to the disclosure;

FIG. 2B illustrates a side view of pull tape and connected handle according to the disclosure;

FIG. 3 illustrates a side view of the dynamo electrical charger with a crank handle according to the disclosure;

FIG. 4 illustrates a side view of the dynamo electrical charger with a pivoted press grip handle according to the disclosure;

FIG. 5 illustrates a side view of the electrical charger with an electromagnetic device operable by shaking the magnet relative to a coil and thereby generating electrical power according to the disclosure;

FIG. 6 illustrates a side view of the dynamo electrical charger with a twist grip handle according to the disclosure;

FIG. 7 illustrates a side view of the electrical charger with a light sensitive panel such as a solar panel for generating electrical power according to the disclosure;

FIG. 8A illustrates a side view of the electrical charger connected with toy plane through a docking ports according to the disclosure;

FIG. 8B illustrates a different side view of the electrical charger for connection with the toy plane through a docking ports according to the disclosure;

FIG. 9A illustrates a side view of the electrical charger connected with a flying saucer toy through a docking ports according to the disclosure;

FIG. 9B illustrates a different side view of the electrical charger for connection with the flying saucer through a docking ports according to the disclosure;

FIG. 9C illustrates a top view of the flying saucer according to the disclosure;

FIG. 9D illustrates a side view of the flying saucer according to the disclosure;

FIG. 10A illustrates a side view of the electrical charger connected with toy helicopter and road vehicle through a docking ports according to the disclosure;

FIG. 10B illustrates a different side view of the electrical charger for connection with the helicopter through a docking ports according to the disclosure;

FIG. 11 illustrates a remote controller with integrated dynamo electrical charger with a pull cord according to the disclosure;

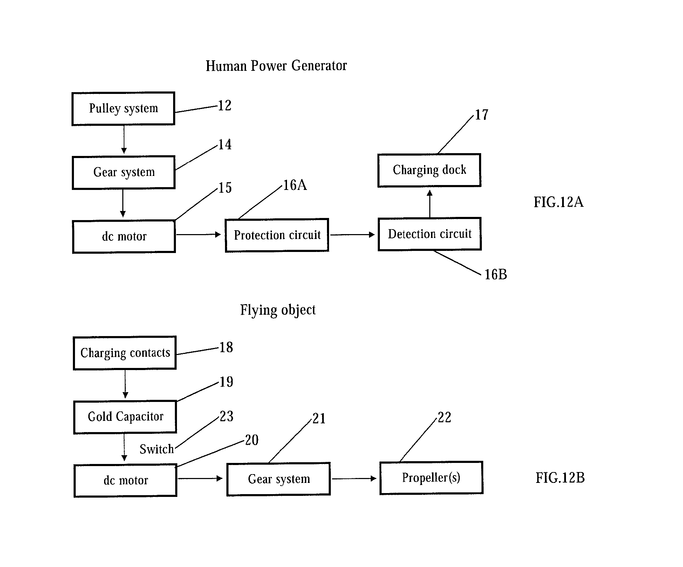

FIG. 12A is an electrical schematic of the power generator of the charger according to the disclosure; and

FIG. 12B is an electrical schematic of the flying object according to the disclosure.

### DETAILED DESCRIPTION

The dynamo electrical charger is operative to recharge an external electrical storage device for use with electronic devices.

A palm size human power generator is a device to generate electricity. The energy is green and it simply converts mechanical energy to electrical energy. As the efficiency is low, it usually used to provide energy for some low-power consumption electrical appliances such as LED driven torch, lighting system, small radio or mobile phone.

There are three major energy storage sources in flying toys, they are:
Rechargeable battery ― such as LiPO or NiMH
Normal battery ― such as Alkaline, Heavy duty and button cell
Gold Capacitor

Among them, rechargeable batteries are the best choice because of their high energy densities and light especially in LiPO. The only disadvantage is that it takes several minutes to an hour for recharging. For a quick charge, a gold capacitor is preferable. This can be in terms of few seconds to fully charge up the capacitor. The capacitance and energy stored is comparatively lower than that of LiPO.

In the disclosure there is a small flying object which is less than 50 grams and take the advantage of human power generator and a light gold capacitor. By means of a mechanism to drive the generator by hand, it converts mechanical energy to electrical energy and stores this energy inside the capacitor inside the flying object. To achieve more than 10 seconds flight time, the pulling process is repeated less than about 20 times.

Different aspects of the disclosure are that the flying object can for instance be a toy helicopter, toy UFO or toy plane. The generator inside the human power generator can be an electric motor or even moving a permanent magnet along the coil or vice versa. A change in magnetic field passing through the coil induces voltage and generates energy according to Faraday's law of induction.

The electric motor can be a single phase dc motor or three phases ac motor. An ac motor is used if higher efficiency is necessary.

In other forms the mechanics to drive the generator can be a long plastic pull tape type, a pull cord type, a hand crank type or a pressing type, or shaking type or twisting type.

Also the power for the human power generator can further be entirely from or be supplemented with a solar cell.

The palm size generator can be a launcher to eject the flying object by pressing a trigger after being fully charged or the flying object can be ejected automatically after the long plastic pull tape is pulled out of launcher.

In some forms the palm size generator can further be embedded inside an IR remote control or R/C remote control or a programmable remote control.

An electrical charger for a toy comprises a housing. There is a manual handle on the housing for generating kinetic energy. There is a dynamo within the housing and in mechanical communication with the handle, and generating electrical energy from the kinetic energy. The dynamo is operative to produce an electrical output. An electronic circuit is in electrical communication with the dynamo, and the electronic circuit generating an electrical output from the electrical output and transmits the electrical output to a power takeoff.

The toy is separable from the charger, and the toy includes an electrical device to be charged by electrical output from the outlet when the power take off and power inlet is connected with the charger.

The toy is operable as a toy under the recharged electrical power when the power take off and power inlet is disconnected.

The handle can be a rotating crank. There can be a gear train in mechanical communication intermediate between the handle and the dynamo.

A hand-held, manually-operated electrical charger comprises a generator that creates a voltage at an output. A handle operably connected to the generator is moved so that the generator creates the voltage in response to the movement of the handle. The voltage is a DC voltage. There is an electronic control circuit for protecting the charger and for detecting the connection of a wireless operated device to the output connection port on the housing through a terminal-charging port of the wireless operated device.

Energy from the DC voltage generator is thereby passed to a capacitor in a wireless electrically operable device. The capacitor is for storing the energy in the wireless operated device. The wireless operated device includes a DC motor for using the stored power in the capacitor to thereby cause movement of the wireless operated device relative to its environment.

The charger includes a housing that encloses the generator, and the capacitor, the electronic control circuit, and the housing defines a hole through which a connector extends to connect the handle to the generator, such that the handle is positioned outside the housing, and wherein the connection port is accessible from outside of the housing.

The handle is movably connected with the housing, such that the handle may be positioned in an operable position in which the handle may be moved to operate the generator. The housing includes a cavity that receives at least part of the handle, and the cavity includes a gear set, the DC voltage generator, and the control circuitry between the generator and a power outlet from the housing.

A voltage regulator limits the DC voltage to a maximum value, the maximum value being between about 2.5 volts and 4 volts for a single capacitor and these values will be doubled if two capacitors are connected in series. The handle is connected to the generator using a series of gears having a gear ratio in the range of 30:1 to 150:1.

A wireless vehicle toy and a charger are connected through a dock for selectively creating an electrical coupling of the vehicle to the dynamo to transfer the electrical charge and decoupling to allow the vehicle to operate independently of the charger. The dock comprises a male electrically conductive element extending from one of the housing and the vehicle and a complementary female electrically conductive element with the other of the housing and the vehicle.

The movement of the handle acts to power the dynamo or DC voltage generator by causing a shaft of the dynamo or generator to rotate. The handle can be displaced linearly relative to the dynamo. Alternatively the handle rotates relative to the dynamo. In a further form there is a twist grip on the housing, the rotation of the twist grip acting to power the dynamo. In yet a further form there is a press grip on the housing, the press grip being pivotally connected with the housing, and movement of the press grip relative to the housing acting to power the dynamo.

In some cases the toy is structured so that a remote control unit is part of a charger. The remote control is for exerting wireless control over at least one moving property of the vehicle selected from the group consisting of speed and direction. There is a remote control antenna with the toy vehicle for receiving wireless control signals from the remote control unit to control the at least one moving property.

The remote control unit can further comprise a manual control extending from the housing.

The toy vehicle can be a flying object and moves in the air through rotor revolution. Alternatively the toy vehicle is selected from the group of a flying object, a car, a boat and a motorcycle.

The charge storage device in the toy that stores the electrical charge within the vehicle is a capacitor.

In another form of the disclosure there is a wireless vehicle toy and a charger. The charger comprises a housing; a light energy receiver with the housing for converting light energy into electrical power. The wireless toy vehicle has a chargeable device, and is permitted to operate under stored power in the chargeable device when charged through the electrical charge from the charger. There is a dock for selectively creating an electrical coupling of the vehicle to the dynamo to transfer the electrical charge and decoupling to allow the vehicle to operate independently of the charge.

In this form the charger can also have a dynamo, the dynamo being for receiving the electrical power from the light energy receiver. In another form the electrical power from the receiver is stored in the charger until the charger is connected with the toy.

In yet a different form there is a wireless vehicle toy and a charger. The charger comprises a housing, and a magnetic energy device is in the housing for converting magnetic energy into electrical power. There is a wireless toy vehicle having a chargeable device, and the toy is permitted to operate under stored power in the chargeable device when charged through the electrical charge from the charger. There is a dock for selectively creating an electrical coupling of the vehicle to the dynamo to transfer the electrical charge and decoupling to allow the vehicle to operate independently of the charger.

In this form the charger can also have a dynamo, the dynamo being for receiving the electrical power from the magnetic energy device. In another form the electrical power from the magnetic energy device is stored in the charger until the charger is connected with the toy.

It is appreciated that dynamo chargers require kinetic energy as an input such that electrical current may be generated and output to external devices and/or electrical storage devices. A grip is provided for imparting manual energy to the dynamo. The grip is appreciated to allow for the input of kinetic energy through a crank, or a squeeze trigger geared to translate the trigger contraction into dynamo rotation. The grip is provided in communication with the dynamo to impart kinetic energy into the device. By making the operation of the dynamo responsive, a device user operates the grip to achieve power generation. A grip is disposed on the housing that allows a user to input the kinetic energy necessary for driving the electrical charger.

A dynamo is disposed within the housing and placed in mechanical communication with the grip. The dynamo operates to produce an electrical output to the electrical receptacle in response to imparting kinetic energy for electrical recharge. The output from the dynamo is also used to power ancillary toy features and in the process curb line power consumption.

The electrical charger includes an electronic circuit in electrical communication with the dynamo output and an electrical circuit. The electronic circuit is operative to condition the electrical output from the dynamo for charging the electrical and driving electronic units placed in communication with the electronic circuit.

The electrical device for recharging via the present disclosure is of the conventional type adapted to be used with a plurality of electronic devices rather than for a specific application.

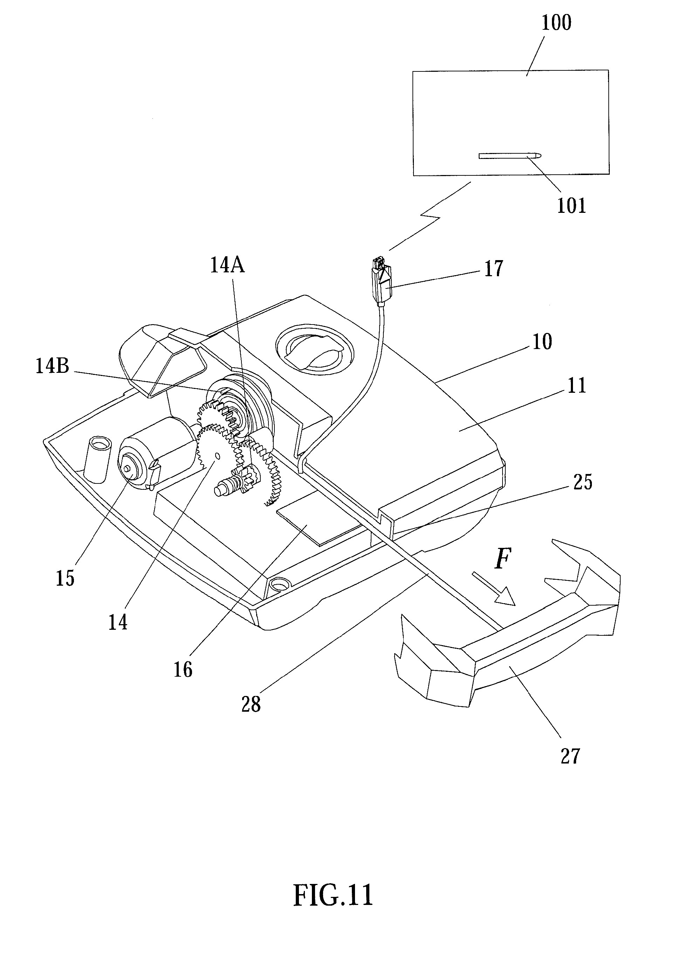

As shown in Figure 11 there is a cord 28 which is drawn as shown by F through an aperture or slot 25 in the housing 11. The one end of the cord engaging the gear system 14 directly or through a wheel and/or pulley and/or clutch 14A to cause the gear system to rotate. The opposite end of the cord 28 has a handle 27 to facilitate the pull through out of the slot 25. There can be spring mechanism 14B biased so that the cord 28 normally wraps around a wheel in the housing, and in this manner is self contained in the housing 11. The gear system 14 is connected to dynamo or dc motor 15 for generating electrical energy from the kinetic energy. The dynamo 15 is operative to produce an electrical output. An electronic circuit 16 is in electrical communication with the dynamo 15. The electronic circuit 16 has at least two components, a protection circuit 16a and a detection circuit 16b and generates a regulated electrical output from the electrical output of the dynamo 15 and transmits this electrical output to a power takeoff charging dock 17.

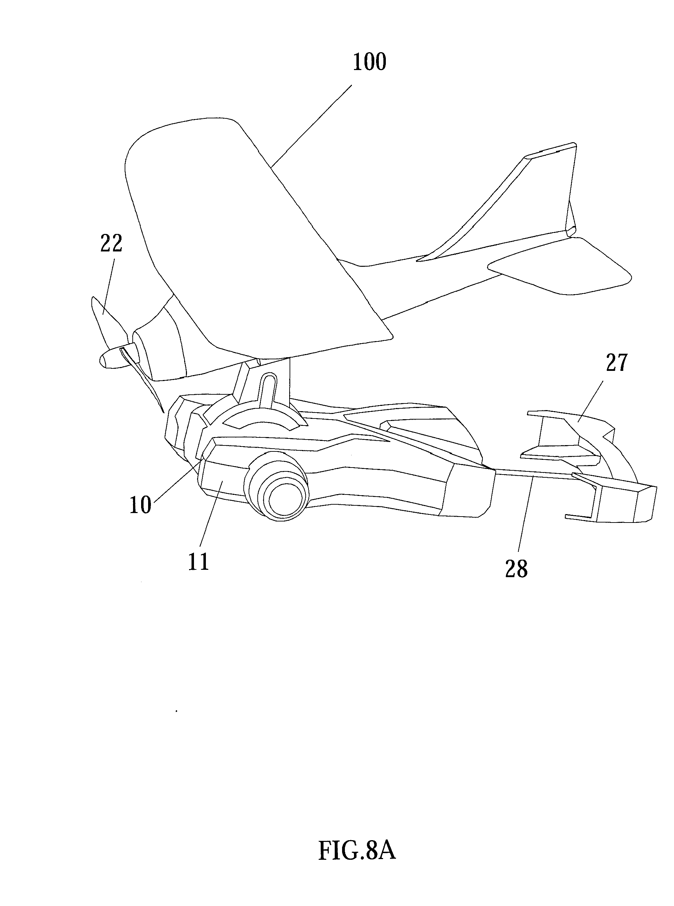

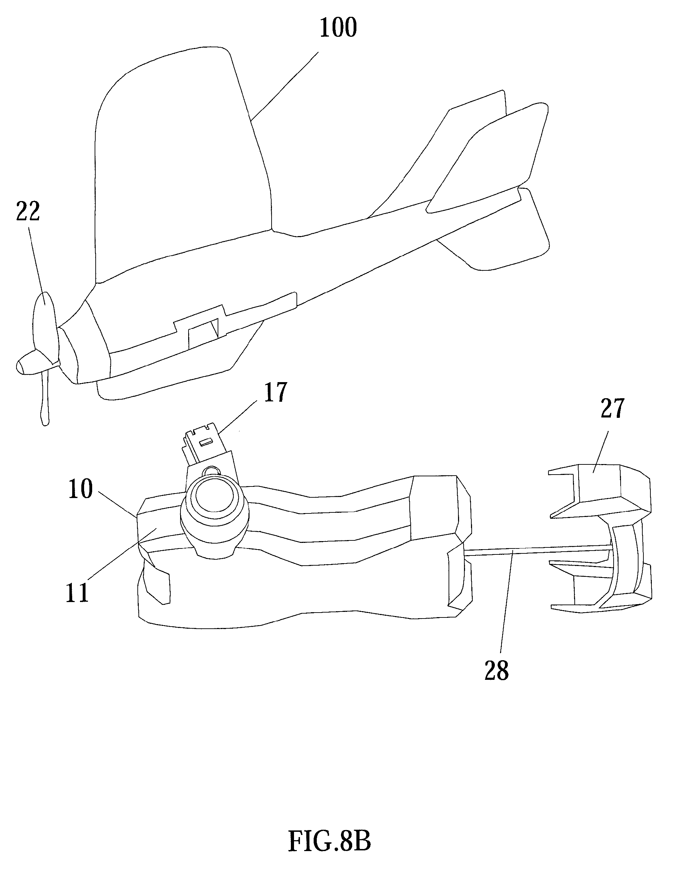

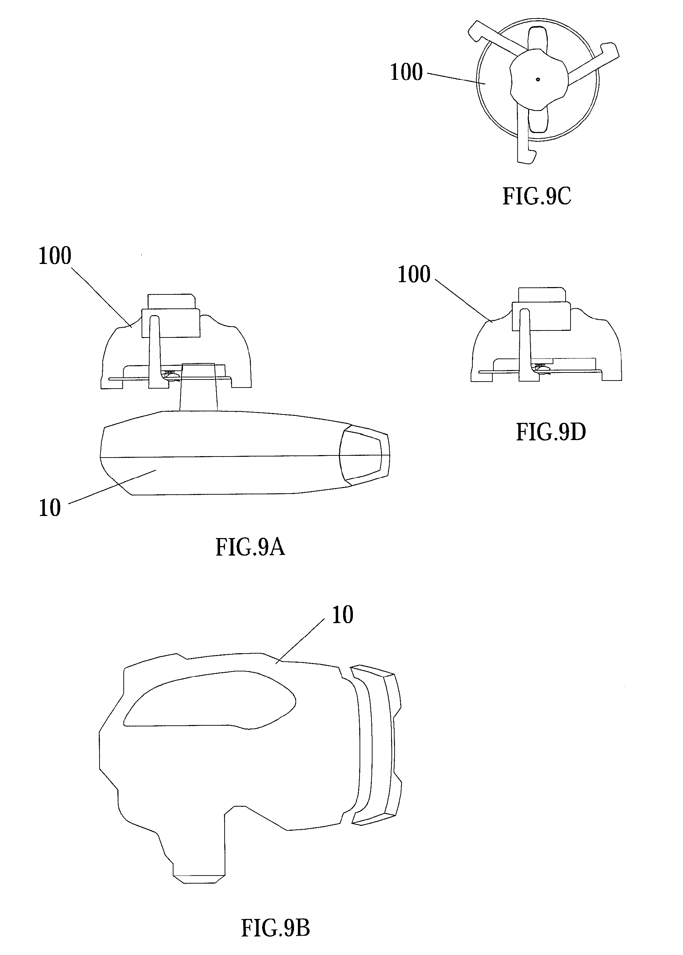

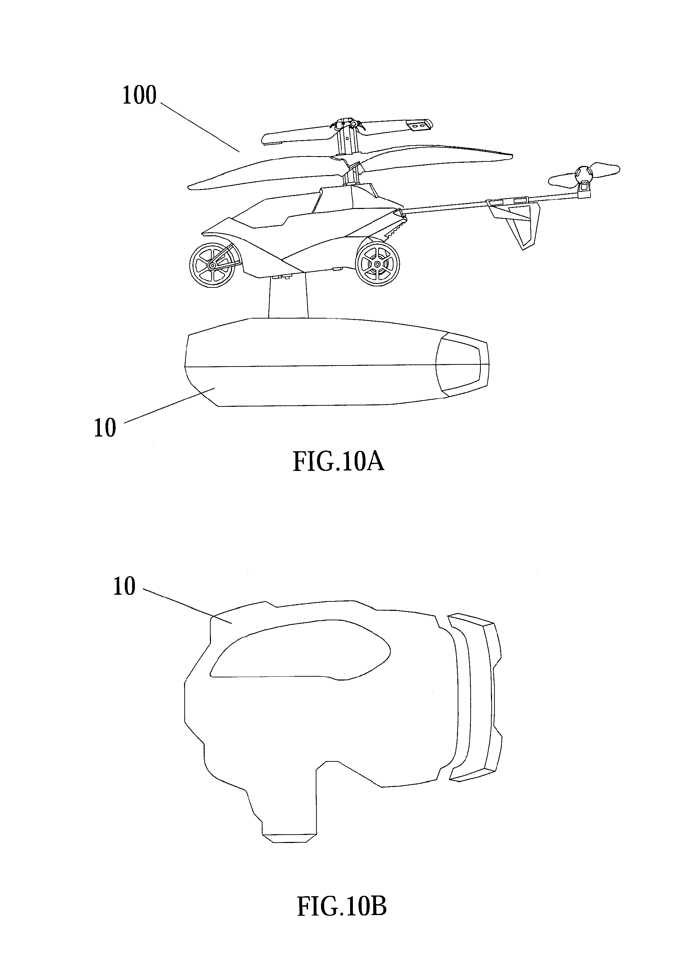

The wireless toy 100 as shown for instance in Figures 8A, 9A, 9C, 9D and 10A is separable from the charger 10. The toy includes electrical charging contacts 18 for connection in the docking station mode to the charger. The contacts 18 are connected in the toy to a gold capacitor 19 to be charged by electrical output from the outlet 17 when the power take off 17 and power inlet contacts 18 are connected. Energy from the DC voltage generator 15 is thereby passed to a capacitor 19. The capacitor 19 is for storing the energy in the toy. The toy includes a DC motor 20 for using the stored power in the capacitor 19 to cause movement of gears 21 in the toy and in turn the rotor or propellers 22 of the toy. There can be switch 23 between the capacitor and the motor 20 to regulate the passage of the stored energy to the motor 20.

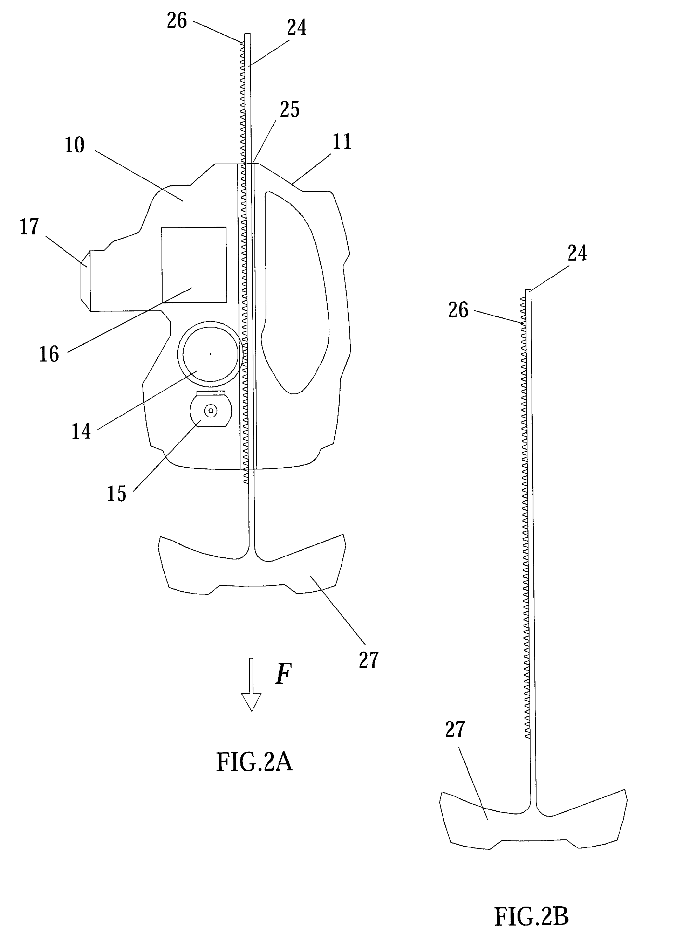

As shown in Figures 2A and 2B, there is a pull tape 24 which is drawn as shown by F through an aperture or slot 25 in the housing 11. On one side of the tape there are teeth 26 arranged in a linear manner for engaging the gear system 14. The one end of the tape 24 has a handle 27 to facilitate the feeding in and pull through out of the slot 25.

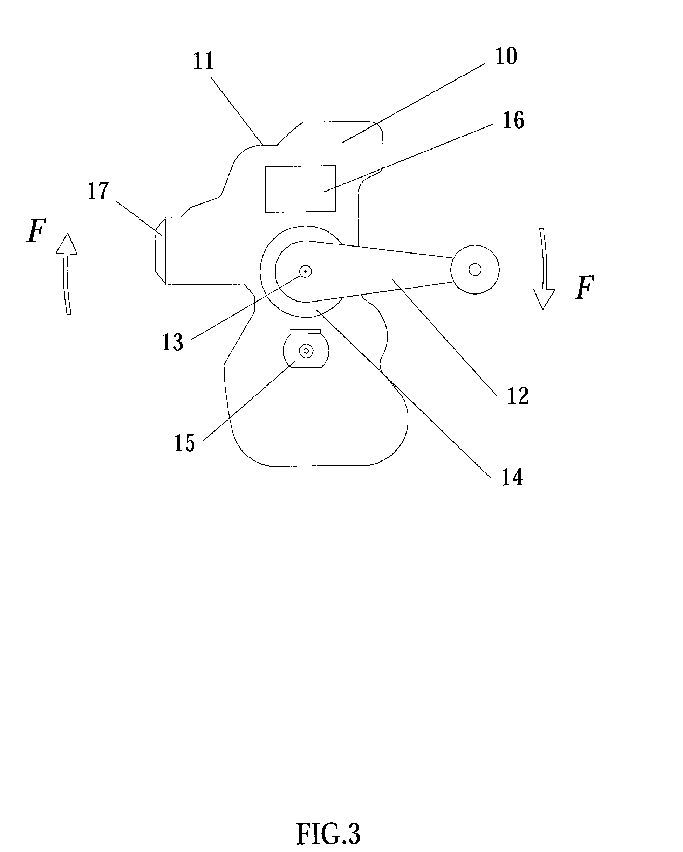

As shown in Figure 3 there is charger 10 that includes a housing 11 with a crank 12 mounted on a spindle 13 for rotation as indicated by arrow F manually for generating kinetic energy. There is a gear box system 14 within the housing and in mechanical communication with the handle of the crank 12.

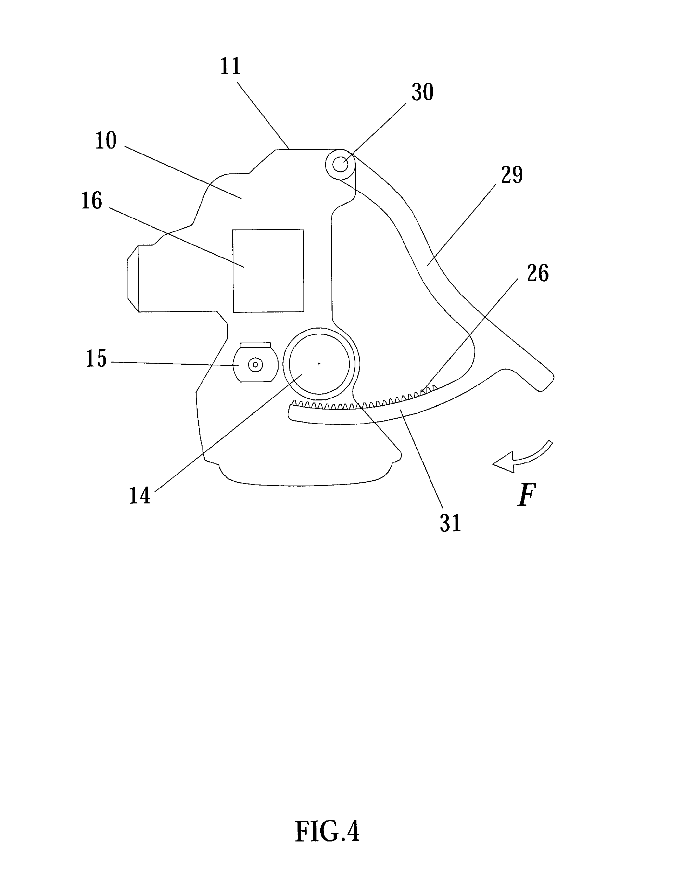

As shown in Figure 4 there is a spring loaded press grip 29 with the housing 11. The press grip 29 is pivotally connected at 30 with the housing 11, and movement inwardly of the press grip 29 relative to the housing 11 acts to power the gear system 14 and in turn the dynamo 15. On one side of an arm 31 there are teeth 26 arranged for engaging the gear system 14 as the grip is pressed inwardly and thereby the gears and dynamo are operated. There can be clutch to prevent the gear box from counter rotating as the grip moves outwardly.

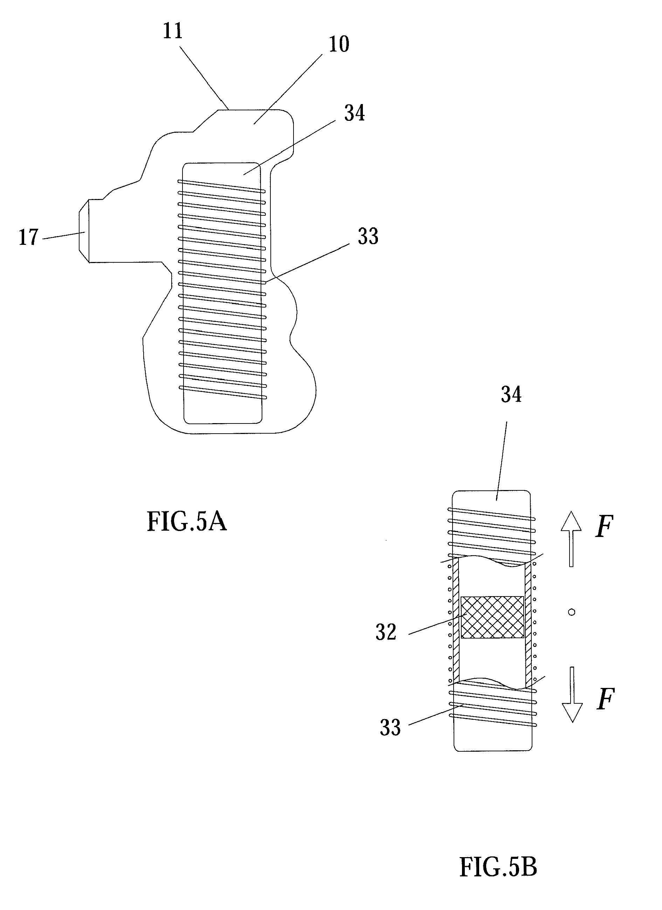

In Figures 5A and 5B the charger uses a magnetic energy device which is a magnet 32 which is moved by shaking action inside a coil 33 mounted on housing 34. The electromagnetic power generated by this action is stored in the charger prior to discharging into the storage device 19 of the toy or the power is directly discharged into the capacitor 19 when connected and shaken.

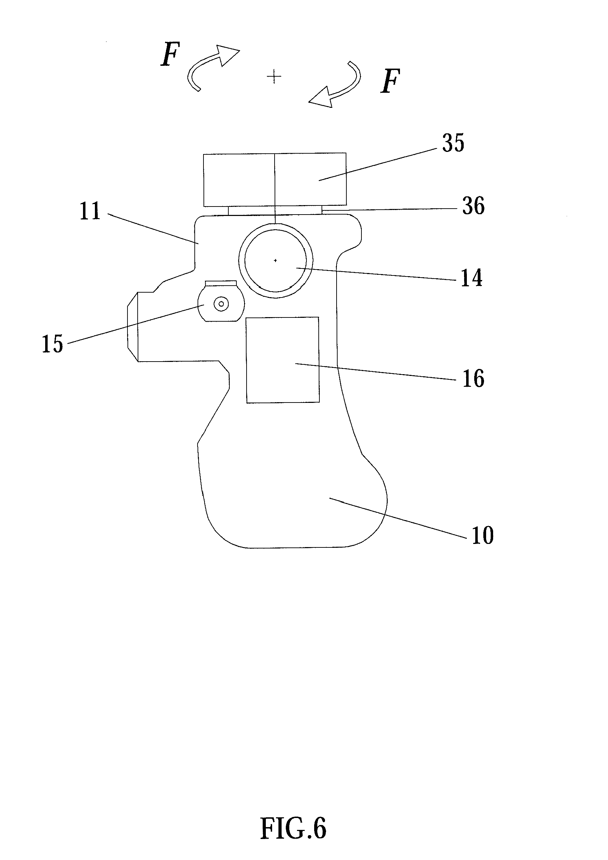

As shown in Figure 6 there is a twist grip 29 with the housing 11. The twist grip 35 is mounted on a shaft at 36 with the housing 11, and rotational twist movement F of the grip 35 relative to the housing 11 acts to power the gear system 14 and in turn the dynamo 15.

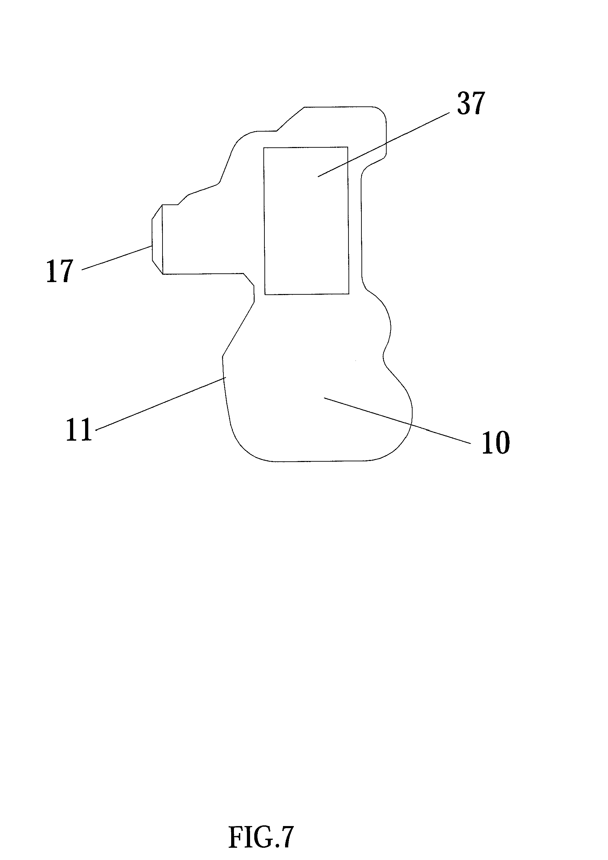

As shown in Figure 7 the charger uses a light, such as solar, energy receiver 37 with the housing 11 for converting light energy into electrical power. The light generated power can be stored in the charger prior to discharging into the storage device 19 of the toy or the power is directly discharged into the capacitor 19 when connected and exposed to the light.

In different cases the handle can be operated to rotate clockwise and/or counterclockwise causing the generator to create an alternating current (AC) voltage. The voltage output can be rectified into a direct current voltage.

There can be one or more super capacitors, such as for example a gold capacitor to store the generated energy in either the charger and/or the toy. As used herein, a "super capacitor, such as a gold capacitor," refers to any capacitor, group of capacitors, or other device capable of creating a capacitance of at least 0.1 farads. In one embodiment, the super capacitor, such as a gold capacitor, has a capacitance of 0.1 farads. In other embodiments, a larger capacitance is used. The charger or toy uses the stored voltage to drive the requisite loads and/or light sources, such as LEDs.

The housing is a lightweight plastic or metal housing, and in one embodiment, that protects the electronic components of the charger from water, dust, and other elements.

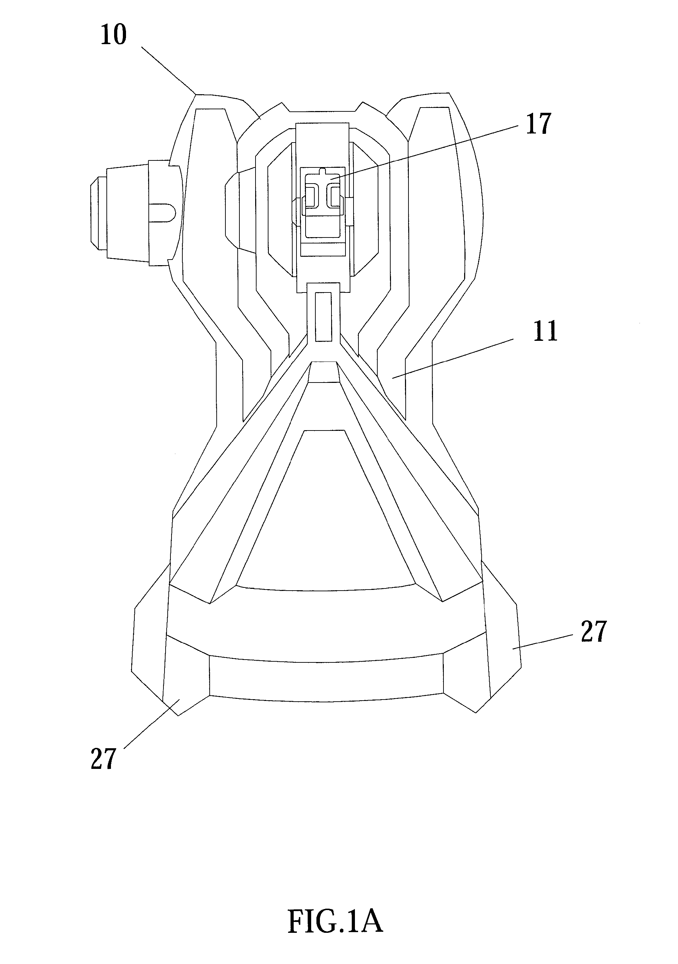

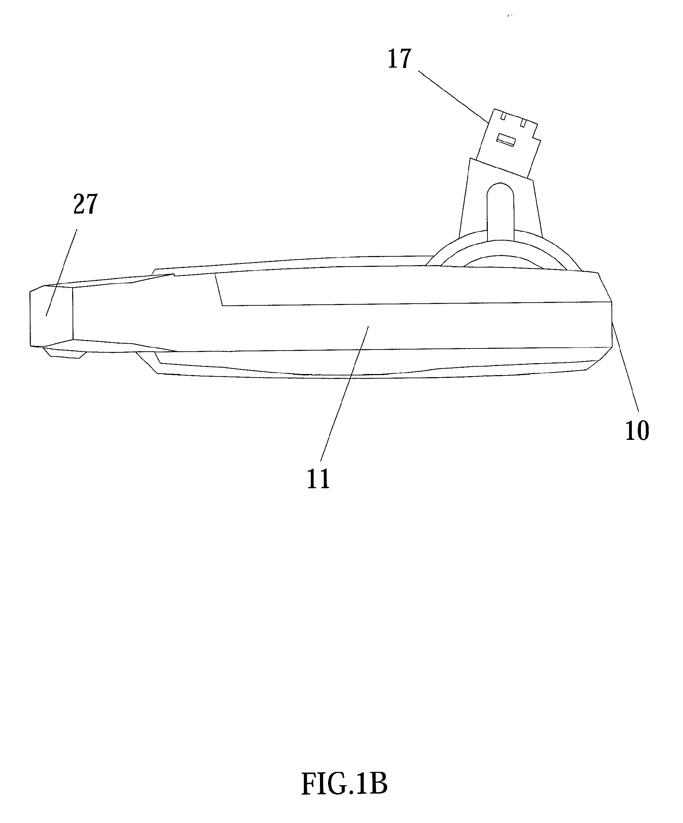

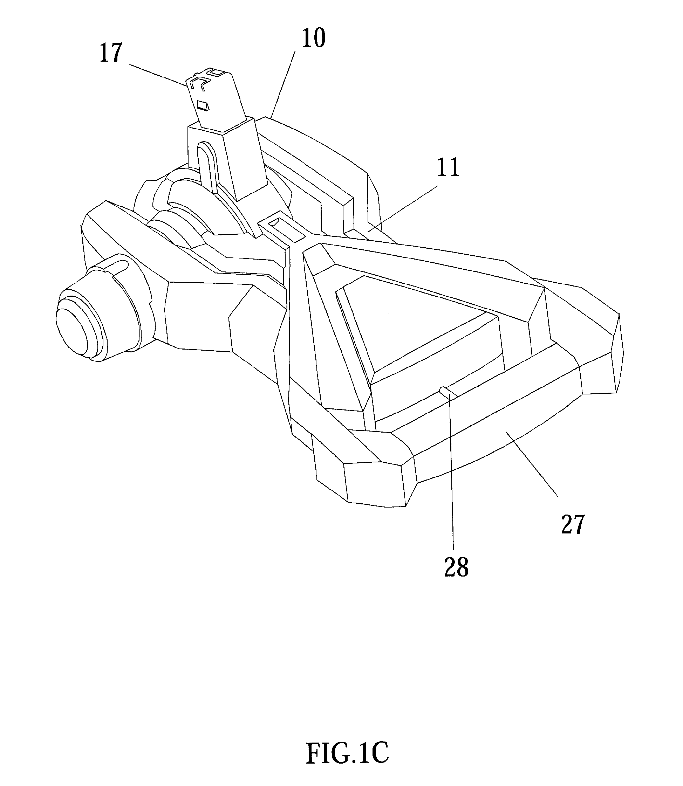

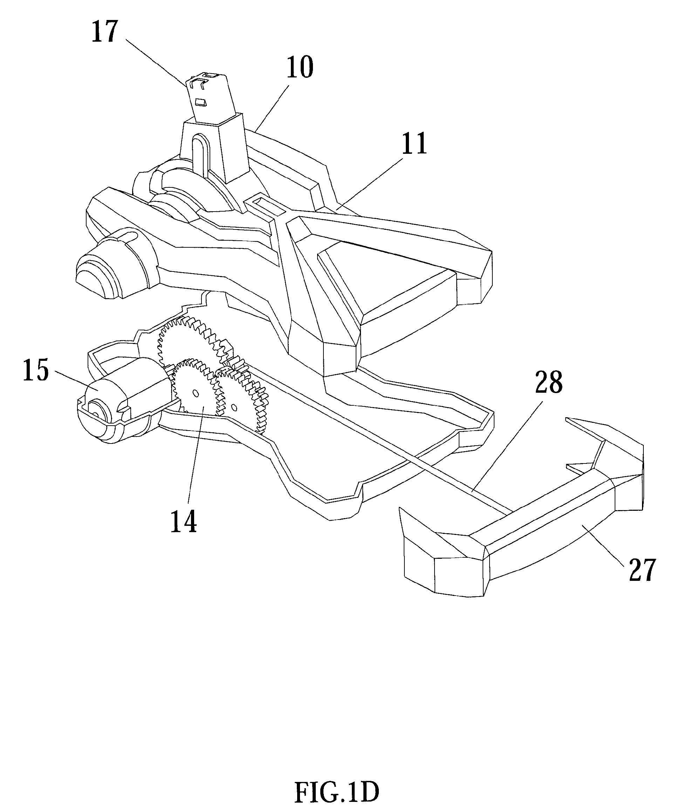

A series of internal gears are used to set the rotational speed of the generator. The series of gears cause the generator to turn at a rate according to a gear ratio relative to turns of the handle. In one embodiment, the gear ratio is in the range of 30:1 to 150:1. In one embodiment, the gear ratio is 65:1. In one embodiment, the generator 15 is a bi-directional DC motor that outputs approximately 6 volts. The gear ratio in one embodiment of the generator is adapted create max current of 500 mA under the condition that the potential difference between generator and capacitor is 3V when the cord 28 in Fig 1A is pushed at a rate of 1 time per second.

The present disclosure has utility as a toy that provides amusement functions such as a movement, and a light emitting diode illumination. The present disclosure performs in this manner through the integration of a manually operated dynamo.

Optionally, a remote control unit is provided in the housing 11 and inclusive of control of at least one movement parameter inclusive of direction; electric motor rotation between for example vehicle non-movement and full speed; and delivered torque. The control unit includes a steering to control vehicle direction and a throttle to control motor speed. A radio control transmitter is also provided within the housing. To allow operation of the remote control unit, a charge storage device is provided within the housing. While preferably the charge storage device is powered by operation of the dynamo, it is appreciated that the use of a conventional disposable, nonrechargeable electrical is also suitable to power the remote control unit. The vehicle operated by the remote control unit includes a radio frequency antenna 101 receiving movement directions from the remote control unit as well as circuitry for translating radio control commands to vehicle movement. The radio frequency antenna tuned to the radio control unit and radio control circuitry controlling operation of the electric motor is also powered by the charge storage device.

The electronic device can be, or can include an electrical pack having one or more rechargeable electrical storage devices. As provided herein, the power source can be used with electrical storage devices packs having different charging requirements, such as different voltage requirements and/or different current requirements.

The handle can include the handle knob and the handle pin. The handle knob is shaped so that it can easily be gripped by the user and operator of the crank assembly. The handle is designed so that it can easily be gripped with either the left hand or the right hand of the user for the convenience of the user. The arm rotates about the pivot assembly when the user applies a force to the handle in a direction substantially perpendicular to the arm and substantially parallel to the outer surface of the housing segment 26. The spindle between the handle and the gear extends through the housing is secured to the gear assembly.

The gear assembly includes a first gear, a second gear and a third gear. The first gear is secured with a rod component to a disc component. The first gear is positioned substantially parallel to and spaced apart from the inner surface of the housing. As the user inputs a force to the handle 56 of the crank, the arm of the crank rotates and, more specifically, the rod also rotates. The rotation of the rod component further causes the first gear to rotate. The first gear is enmeshed with the second gear so that the rotation of the first gear causes the second gear to rotate in the opposite direction. The second gear is enmeshed with the third gear so that the rotation of the second gear, in turn, causes rotation of the third gear. The third gear is secured to the rotor component of the motor.

The stator component is substantially ring shaped and substantially encircles the rotor component. The stator component can be secured to the housing. One of the rotor component and the stator component includes a magnet array having one or more magnets and the other of the stator component and the rotor component 18 includes one or more turns of wire.

The control system controls charging of the electronic device. In one embodiment, the control system controls the torque at the crank assembly that is experienced by the user. In one embodiment, the control system constantly monitors the input and output parameters of the power source and provides visual feedback to the user as to the progress of the power generation process. The control system can include a display, a user input and a control board. The display can display one or more of the functions of the power source. For example, the display can display one or more of the features (i) the rate of charging of the electronic device In one embodiment, the display is a liquid crystal display. Alternatively, for example, the display can include one or more gauges or other type of monitors such as LEDs.

The electrical pack can include one or more rechargeable electrical storage devices, such as lithium iron phosphate, nickel-metal-hydride, lead-acid, and/or lithium-ion.

Many of the features of the present disclosure are implemented by suitable algorithms that are executed by the control board. For example, all voltages and, currents at critical circuit points, temperature, time, crank position and velocity are monitored by the software routines.

Although the present disclosure has been described with respect to particular embodiments thereof, variations are possible. The power may be generated in the charger when the charger and toy are coupled together, or may be separately generated in the charger when decoupled from the toy, and then later transferred to the toy when coupled. For instance, instead of charging a capacitor in the toy, there could be other devices for instance a rechargeable battery.

The present disclosure may be embodied in specific forms without departing from the essential spirit or attributes thereof. In particular, although the disclosure is illustrated using a particularly circuit schematic with particular circuit component values, one skilled in the art will recognize that various values and schematics will fall within the scope of the disclosure. It is desired that the embodiments described herein be considered in all respects illustrative and not restrictive and that reference be made to the appended claims and their equivalents for determining the scope of the disclosure.

## Claims

1. An electrical charger for a toy, the charger comprising a housing that provides a manual handle on the housing for generating kinetic energy; a dynamo within the housing and in mechanical communication with the handle and generating electrical energy from the kinetic energy, the dynamo being operative to produce an electrical output; an electronic circuit in electrical communication with the dynamo, the electronic circuit generating a electrical output from the dynamo and transmitting the electrical output to a power takeoff for transferring at least a portion of the electrical energy to a power inlet for a toy, the toy being separable from the charger, and the toy including an electrical storage device to be charged by electrical output from the inlet when the power take off of the charger and power inlet of the toy is connected, and the toy being operable as a toy under the charged electrical power when the power take off and power inlet is disconnected.

2. The electrical charger of claim 1 wherein the handle includes a pulley with a cord, and the handle is for linear movement relative to the housing, the movement of the handle acting to power the generator.

3. The electrical charger of either claim 1 or 2 further comprising a gear train in mechanical communication intermediate between the handle and the dynamo, the gear ratio between a range of 30:1 to 150:1.

4. The electrical charger of any one of claim 1 to 3 comprising a dynamo that creates a voltage at an output; a handle operably connected to the dynamo, wherein the dynamo creates the voltage in response to turning of the handle, and creating the voltage as a DC voltage, an electronic control circuit for protecting the charger and for detecting the connection of a wireless operated toy to the output connection port through a terminal-charging port of the wireless operated device, and thereby provides that energy from the DC voltage dynamo is transferred to the chargeable device in a wireless electrically operable toy, the chargeable device being for storing the energy in the wireless operated toy, and the wireless operated toy including a DC motor for using the stored power to thereby cause movement of the wireless operated toy relative to its environment.

5. A charger and a wireless toy vehicle toy, the charger comprising a housing; a light energy receiver with the housing for converting light energy into electrical power, the housing includes a dynamo, the dynamo being for receiving the electrical power from the light energy receiver, the wireless toy vehicle having a chargeable device, and being permitted to operate under stored power in the chargeable device when charged through the electrical charge from the charger; and a dock for selectively creating an electrical coupling of the vehicle to the dynamo to transfer the electrical charge and decoupling to allow the vehicle to operate independently of the charger.

6. A charger and a wireless toy vehicle, the charger comprising a housing; a magnetic energy device in the housing for converting magnetic energy into electrical power, the housing includes a dynamo, the dynamo being for receiving the electrical power from the magnetic energy device, the wireless toy vehicle having a chargeable device, and being permitted to operate under stored power in the chargeable device when charged through the electrical charge from the charger; and a dock for selectively creating an electrical coupling of the vehicle to the dynamo to transfer the electrical charge and decoupling to allow the vehicle to operate independently of the charger.

7. The electrical charger of any one of claims 1 to 6, further comprising a voltage regulator that limits the DC voltage to a maximum value, the maximum value being between about 2.5 volts and 4 volts.

8. The charger of any one of claims 1 to 7 including a wireless toy vehicle and a dock for selectively creating an electrical coupling of the vehicle to the dynamo to transfer the electrical charge and decoupling to allow the vehicle to operate independently of the charger.

9. The charger and toy of claim 8 wherein the dock comprises a male electrically conductive element extending from one of the housing and the vehicle and a complementary female electrically conductive element with the other of the housing and the vehicle.

10. The charger and toy of any of claims 1 to 9 further comprising a handle for movement, displacement or rotation relative to the dynamo, the movement of the handle acting to power the dynamo.

11. The charger and toy of any one of claims 1, 3 to 10 further comprising a twist grip on the housing, the rotation of the twist grip acting to power the dynamo.

12. The charger and toy of any one of claims 1, 3 to 10 further comprising a press grip on the housing, the press grip being pivotally connected with the housing, and movement of the press grip relative to the housing acting to power the dynamo.

13. The charger and toy of any one of claims 1 to 12 further comprising a remote control unit, selectively being part of a charger and being for exerting wireless control over at least one moving property of the vehicle selected from the group consisting of speed and direction; and a remote control antenna with the toy for receiving wireless control signals from the remote control unit to control the at least one moving property.

14. The charger and toy of any one of claims 1 to 13 wherein the toy is a vehicle selected from the group of a flying object, a car, a boat and a motorcycle.
